# EUROPEAN PATENT APPLICATION

(11) **EP 2 708 126 A1**
(43) Date of publication of application: **19.03.2014**
(21) Application number: 12006450.6
(22) Date of filing: 14.09.2012
(51) Int. Cl.: A01P 7/04, A01N 47/22, A01N 53/02, A01N 53/00

(54) **Insecticidal aerosol**

(71) Applicant: Aragon Net Ltd., Wanchai (HK)
(72) Inventor: Kamoune, Radhouane, Dr., 69118 Heidelberg (DE)
(74) Representative: Stoppkotte, Cornelia

(57) **Abstract**

The present invention is directed to an insecticidal aerosol, comprising alpha cypermethrin, permethrin, tetramethrin, piperonyl butoxide, and optionally also bendiocarb. In particular, the present invention relates to an insecticidal aerosol for combatting all kinds of insects, in particular mosquitoes transmitting malaria.

## Description

The present invention relates to an insecticidal aerosol, comprising several insecticidally active substances. In particular, the present invention relates to an insecticidal aerosol for combatting mosquitoes transmitting malaria.

Malaria is a mosquito-bome infectious disease of humans and other animals, caused by a mosquito parasite of the genus *Plasmodium.* The disease is widespread in tropical and subtropical regions in a broad band around the equator, including much of Sub-Saharan Africa, Asia and America. It is known that five species of *Plasmodium* can infect and be transmitted by humans, where the vast majority of deaths are caused by *Plasmodium falciparum.*

The mosquitos hosting this parasite frequently belong to the genus *Anopheles* or *Culex.* Examples for hosts for malaria parasites are *Anopheles gambiae, Anopheles arabiensis* or *Culex quinquefasciatus.*

In Africa, every 45 seconds a child dies from malaria. Thus malaria accounts for 20 % of all childhood deaths. Altogether, in 2009, more than 750.000 people died due to malaria.

Based on this situation, it is the object of the present invention to provide an insecticidal composition being more effective to combat insect pests, in particular malaria transmitting mosquitoes, than the compositions presently used.

This object is solved by an insecticidal aerosol, comprising:
00.1 - 0.5 % by weight of alpha cypermethrin,
00.1 - 0.3 % by weight of permethrin,
0.01 - 0.5 % by weight of tetramethrin,
0.1 - 3.0 % by weight of piperonyl butoxide,
0 - 0.5 % by weight of a fragrance,
one or more solvents, and
one or more propellants.

Preferably, the insecticidal aerosol comprises:
0.1 - 0.4 % by weight, preferably 0.15 - 0.3 % by weight of alpha cypermethrin, and/or
0.1 - 0.25 % by weight, preferably 0.15 - 0.25 % by weight of permethrin, and/or
0.05 - 0.4 % by weight, preferably 0.08 - 0.3 % by weight of tetramethrin, and/or
0.1 - 2.0 % by weight, preferably 0.2 - 0.6 % by weight of piperonyl butoxide and/or
48 - 52 % by weight of one or more solvents, and/or
48 - 52 % by weight of one or more propellants.

Alpha cypermethrin (normally a racemic mixture of (S)-α-cyano-3-phenoxybenzyl-(1R,3R)-3-(2,2-dichlorovinyl)-2,2-dimethylcyclopropane-carboxylate and (R)-α-cyano-3-phenoxybenzyl-(1S,3S)-3-(2,2-dichlorovinyl)-2,2-dimethylcyclopropane-carboxylate), permethrin (normally a mixture of the 1RS, 3RS (cis) and 1RS, 3SR (trans) diastereomers of 3-phenoxybenzyl-3-(2,2-dichlorovinyl)-2,2-dimethylcyclopropane-carboxylate) and tetramethrin (normally a racemic mixture of [(1,3,4,5,6,7-hexahydro-1,3-dioxo-2H-isoindol-2-yl)methyl 2,2-dimethyl-3-(2-methyl-1-propenyl)cyclopropane-carboxylate]) belong to the family of pyrethroids. The single substances are known as insecticides, however, the present mixture of three specific insecticides and piperonyl butoxide in form of an aerosol showed an improved synergistic effect, compared to the single substances.

Piperonyl butoxide is used as an additive, known to improve the activity of pyrethroid insecticides. However, it is also known to be active against ants.

Particularly preferred, the aerosol comprises in addition 0.2 - 0.6 % by weight, preferably 0.3 - 0.5 % by weight of a carbamate insecticide, in particular of bendiocarb. The inventor surprisingly found, that the addition of bendiocarb (2,2-dimethyl-1,3-benzodioxol-4-yl-N-methylcarbamate) led to an unexpected improvement of the efficacy of the insecticide mixture of the three pyrethroids described before. In particular, the aerosol comprising bendiocarb showed an improved effect being active against a broader range of insects, for example an improved activity with regard to cockroaches. Due to this fact, the aerosol comprising bendiocarb can be used worldwide and not only in restricted local regions. Furthermore, the aerosol comprising bendiocarb proved to be very stable.

In addition, problems with resistances of various insects against pyrethroid insecticides are not encountered when using a carbamate insecticide, in particular bendiocarb, in combination with the pyrethroids. Therefore, bendiocarb containing insecticides can also be used in central regions, far away from the coast, where resistances are generally more present than in coastal regions.

In the insecticidal aerosol described herein, the solvent is preferably a hydrocarbon solvent or a mixture of hydrocarbon solvents selected from ethanol, crude oil, petroleum, acetone and mixtures thereof. However, without bendiocarb, also water may be used as a solvent.

Furthermore, in the inventive insecticidal aerosol, the propellant may be selected from the group consisting of propane, butane, and mixtures thereof. A preferred mixing ratio of propane and butane is 70% by weight of propane and 30% by weight of butane. Moreover, it is preferred that the inventive aerosol comprises about 50 % by weight of one or more propellants, in particular of propane and butane.

To improve the smell of the aerosol product, a fragrance or perfume as for example jasmine flavor may be added.

A particularly preferred insecticidal aerosol according to the present invention comprises:
about 0.2 % by weight of alpha cypermethrin,
about 0.2 % by weight of permethrin,
about 0.1 % by weight of tetramethrin,
about 0.3 % by weight of piperonyl butoxide,
48 - 52 % by weight, preferably 49 % by weight of distillates (crude oil),
48 - 52 % by weight, preferably 50 % by weight of propane and butane, and
0 - 0.2 % by weight, preferably 0.2 % by weight of a fragrance.

Another even more preferred inventive insecticidal aerosol comprises:
about 0.25 % by weight of alpha cypermethrin,
about 0.2 % by weight of permethrin,
about 0.15 % by weight of tetramethrin,
about 0.5 % by weight of piperonyl butoxide,
about 0.4 % by weight of bendiocarb,
48 - 52 % by weight, preferably 48.3 % by weight of ethanol,
48 - 52 % by weight, preferably 50 % by weight of propane and butane, and
0 - 0.2 % by weight, preferably 0.2 % by weight of a fragrance.

The aerosols according to the present invention are preferably contained in spray cans, particularly preferred in spray cans of normal household size of 100 to 500 ml, for example 300 ml. This leads to the advantage that the present aerosols can be used by everybody, even by children, without specific training. No complicated equipment is needed as for known insecticides as for example Fendona® marketed by BASF.

As a consequence, combatting insects using the present aerosol is also less expensive than using the insecticides used before.

The inventive aerosols may be used for combatting insect pests and parasites and all kinds of household insects. In particular, they are used for combatting mosquitoes, flies, cockroaches, bugs, lice, ants, and termites.

Moreover, the inventive aerosols may be used for combatting mosquitoes transmitting malaria, preferably selected from the group consisting of *Anopheles gambiae, Anopheles arabiensis* and *Culex quinquefasciatus.* In addition, the inventive aerosols also proved to be effective against tiger mosquitoes known to transmit dengue fever.

Since the aerosol according to the present invention is not harmful for human beings, it is particularly suited to be used for indoor residual spraying (IRS) for combatting the spread of Malaria. IRS is the organized, timely spraying of an insecticide on the inside walls of houses or dwellings. It is designed to interrupt malaria transmission by killing adult female mosquitoes when they enter houses and rest on the walls after feeding, but before the can transmit the infection to another person.

### Example

The efficacy of an inventive insecticidal composition has been shown by a study carried out in Mali as described in the following. % values given are always % by weight.

The specific objectives of the study were:
1. Determine the efficacy of an inventive aerosol formulation on cockroaches;
2. Determine the efficacy of an inventive aerosol formulation on mosquitoes;
3. Determine the efficacy of an inventive aerosol formulation on flies.

### MATERIALS AND METHODS

### Biological materials

The study focused on insects of medical importance that infect human dwellings. These are mosquitoes, flies and cockroaches.

### Mosquitoes

### Reminders of some characteristics of mosquitoes in Mali:

Mosquitoes of medical importance that enter rooms (to feed or rest there) are Anopheles (*Anopheles gambiae* and *An. arabiensis*) and Culex *(Culex quinquefasciatus*). Anopheles are mosquitoes that breed in clear, unpolluted water. Therefore, they can proliferate only when their own natural breeding grounds are available (in rainy season) or in an anthropogenic breeding ground (with irrigation). They are rare in urban areas. *C. quinquefasciatus* is a mosquito that prefers polluted water. This is the mosquito found in towns and built-up areas where waste water is stagnant because of a poor drainage system. *C quinquefasciatus* bite only at night (sunset to sunrise). This species is resistant to several insecticides, more so than Anopheles.

### Mosquitoes tested

### Species tested

The tests were conducted on *C. quinquefasciatus.* Surveys carried out at Sélingué and Fanza (15 km apart) showed that the low anopheline densities present do not constitute suitable conditions for a certification study on the bioefficacy of an insecticide.

### Origin

N'Golonina was finally chosen as the location to capture the insects after surveys were carried out in several districts of Bamako (Quartier du Fleuve, N'Golonina, IPR of Katibougou annex at the shopping centre, Korofina industrial area, Sotuba), the court and offices of the National Center for Scientific and Technical Research (CNRST) and the Higher Institute of Training and Applied Research (ISFRA).

### Collection technique

Mosquitoes were captured (one by one) in human landing collections using a test tube and in mosquito traps. The collecting session took place from 7 pm to 2 am on 22 June 2012.

### Flies

### Species tested

The housefly (*Musca domestica*) was caught.

### Origin

The flies were captured specifically at the fresh fish retails points in the Médina Coura market. Here, fish are descaled and gutted outdoors in front of the shop. This attracts flies in large numbers.

### Collection technique

The flies were trapped in a widely opened cage that was placed over the flies while they were feeding. By tapping on the base, the flies start to fly and are trapped. The flies were caught in the morning between 8 am and 11 am on 20 June 2012.

### Cockroaches

### Species tested

Several species of cockroach were tested as found at the sampling site.

### Origin

The cockroaches studied originate from the Quartier du Fleuve (Bamako) where poultry and rabbits are slaughtered and butchered before being sold. There is a pronounced state of insalubrity here; the facilities lack structure and hygiene measures are inadequate. Old packaging (boxes, bags) stacked on top of each other are breeding grounds for cockroaches and other insects.

### Collection technique

The packaging harbouring the cockroaches is lifted carefully and shaken into a mosquito net bag. The bag is closed to contain the trapped insects.

### Technical materials

### Insecticide

Essential information relating to the commercial formulation of an insecticide according to the present invention (AraGon insecticide):
● Trade name: AraGon insecticide
● Active ingredients:
   - 0.18% alpha cypermethrin
   - 0.20% permethrin
   - 0.26% tetramethrin
   - 0.42% bendiocarb
● Chemical family: Pyrethroid and carbamate
● Type of formulation: aerosol
● Toxicity of the active substance in rats through ingestion
   - Alpha cypermethrin: LD50 of 79 mg/kg;
   - Permethrin: LD50 of 383 mg/kg;
   - Tetramethrin: LD50 of 4640 mg/kg;
   - Bendiocarb: LD50 of 55mg/kg

A 300 ml spraying device supplied by the manufacturer was used.

### Control insecticide

A 500ml aerosol insecticide already approved by the Sahelian Pesticides Committee and currently widely sold in Mali was chosen. The main components of the aerosol are as follows (in alphabetical order):
Piperonyl butoxide: 0.34%
d-Phenothrin: 0.01%
Permethrin: 0.25%
Tetramethrin: 0.20%

### Collection and observation material

### Cages

- The 45 cages that have been made are comprised of metal frames placed in white mosquito net bags. There are two types with different dimensions:
- Three parallelepipeds with bases measuring 50 cm x 30 cm and 50 cm in height to capture flies and cockroaches;
- 42 cube-shaped trapping cages measuring 20 cm³ used to keep the insects in captivity for the purpose of the study (exposure to insecticides).

The cages (frame and netting) were washed with soap and copious amounts of water to remove all traces of insecticides that could influence the results.

### Mosquito traps

They were used to capture the mosquitoes. Two mosquito traps consisting of a one-man mosquito net contained in a two-man mosquito net with a veranda. A person lying under the one-man mosquito net serves to attract the mosquitoes, but their access is blocked by the veranda; the mosquitoes are then trapped manually using a test tube.

### Insect sorting equipment

To assist with transferring the captured insects into cages, they are subjected to a decrease in temperature in a cold room (fridge or freezer).

### Room or rooms to be sprayed

An aerosol is designed for use in a closed environment. To maintain scientific rigour, similar rooms were identified and booked in a small hotel in the Moribabougou area 10 km from Bamako which has rooms almost similar to those encountered in urban Mali.

The rooms reserved had an internal volume of 48 m³, i.e. 4m x 4m x 3m.

### Experiment methods

### Place and duration of study

The study, originally scheduled to take place in Sélingué and Bamako, was only carried out in the town of Moribabougou on the outskirts of Bamako. Sélingué was dismissed due to the low density of insects sought and the good hygiene practices used there.

### Methods of exposing the insects to insecticides

### Treatments

The experiment involved the following three treatments:
✔ Treatment 1: Aerosol insecticide according to the present invention (ARAGON);
✔ Treatment 2: control product, an approved aerosol insecticide;
✔ Treatment 3: absolute control

### Number of repetitions

● For the experiments on flies, there were ten (10) repetitions (cages) for each chemical product and two (2) repetitions for the absolute control (untreated insects). Each cage contained 25 flies.
● With regard to mosquitoes, there were twelve (12) repetitions for each product and four (4) repetitions for the absolute control (untreated insects). Each cage contained 20 mosquitoes.
● With regard to cockroaches, there were five (5) repetitions for each product and two (2) repetitions for the absolute control (untreated insects). Each cage contained 20 cockroaches.

### Conducting the experiment

The experiment was carried out in three stages which correspond to the three types of insects. The cages containing the insects were placed in three identical rooms of the hotel, with one room per treatment. Which room was used for each of the three treatments was chosen at random. The product was sprayed in a comprehensive manner; that is to say, the room was sprayed all over with one product.

The windows were closed and the product was sprayed using continuous pressure for 20 s. The room was then closed for 30 min. The door and windows were reopened to ventilate the rooms, and the cages were then removed for observations to be made.

### Variables

To collect data on the variables, a manual and visual count was conducted of the dead, dying and alive insects at different intervals: 30 min, 1 hour and 12 hours after exposure to the treatments. The variables are the number of insects dead, dying or alive.

### RESULTS OF THE STATISTICAL ANALYSIS

**Table 1: Experiment results on mosquitoes (Culex quinquefasciatus)**

| **Cage no.** | **No. exposed** | **ARAGON** | | | | INSECTICIDE CONTROL | | | ***Efficacy (%)** |
|---|---|---|---|---|---|---|---|---|---|
| | | **Dead** | **Dying** | **Alive** | **Efficacy (%)** | **Dead** | **Dying** | **Alive** | |
| 1 | 20 | 20 | 0 | 0 | 100 | 18 | 0 | 2 | 90 |
| 2 | 20 | 20 | 0 | 0 | 100 | 20 | 0 | 0 | 100 |
| 3 | 20 | 20 | 0 | 0 | 100 | 18 | 2 | 0 | 90 |
| 4 | 20 | 20 | 0 | 0 | 100 | 20 | 0 | 0 | 100 |
| 5 | 20 | 20 | 0 | 0 | 100 | 18 | 0 | 2 | 90 |
| 6 | 20 | 20 | 0 | 0 | 100 | 20 | 0 | 0 | 100 |
| 7 | 20 | 20 | 0 | 0 | 100 | 18 | 2 | 0 | 90 |
| 8 | 20 | 20 | 0 | 0 | 100 | 20 | 0 | 0 | 100 |
| 9 | 20 | 20 | 0 | 0 | 100 | 20 | 0 | 0 | 100 |
| 10 | 20 | 20 | 0 | 0 | 100 | 19 | 1 | 0 | 95 |
| 11 | 20 | 20 | 0 | 0 | 100 | 20 | 0 | 0 | 100 |
| 12 | 20 | 20 | 0 | 0 | 100 | 20 | 0 | 0 | 100 |
| **Total** | **240** | **240** | 0 | 0 | 100 | **231** | **5** | **4** | 96,25 |
| **Mean** | | | | | 100 | | | | |
| Variance | | | | | 0 | | | | |
| Standard deviation | | | | | 0 | | | | |

| | | | | | | | | | |
|---|---|---|---|---|---|---|---|---|---|
| **Mortality rate (as a %) 30 min after the mosquitoes were exposed to the products** | | | | | | | | | |

### Interpretation of the mosquito mortality results

From these test results, it appears that the differences between the average mortality rates observed are statistically nearly equivalent (no significant difference between the averages of the two products, 100% for AraGon and 96.25% for the control product). Consequently, both products have a similar level of efficacy against mosquitoes, while the inventive product proved to be slightly better. The mortality rate observed in the absolute control (0%) confirms that the materials had no impact on mortality.

### Experiment results on flies (Culex quinquefasciatus)

**Table 2: Mortality rate (as a %) 30 min after the flies were exposed to the products**

| **Cage no.** | **No. exposed** | **ARAGON** | | | | CONTROL INSECTICIDE | | | ***Efficacy (%)** |
|---|---|---|---|---|---|---|---|---|---|
| | | **Dead** | **Dying** | **Alive** | **Efficacy (%)** | **Dead** | **Dying** | **Alive** | |
| 1 | 25 | 25 | 0 | 0 | 100 | 25 | 0 | 0 | 125 |
| 2 | 25 | 25 | 0 | 0 | 100 | 25 | 0 | 0 | 125 |
| 3 | 25 | 25 | 0 | 0 | 100 | 25 | 0 | 0 | 125 |
| 4 | 25 | 25 | 0 | 0 | 100 | 25 | 0 | 0 | 125 |
| 5 | 25 | 25 | 0 | 0 | 100 | 25 | 0 | 0 | 125 |
| 6 | 25 | 25 | 0 | 0 | 100 | 25 | 0 | 0 | 125 |
| 7 | 25 | 25 | 0 | 0 | 100 | 25 | 0 | 0 | 125 |
| 8 | 25 | 25 | 0 | 0 | 100 | 25 | 0 | 0 | 125 |
| 9 | 25 | 25 | 0 | 0 | 100 | 25 | 0 | 0 | 125 |
| 10 | 25 | 25 | 0 | 0 | 100 | 25 | 0 | 0 | 125 |
| **Total** | **250** | **250** | 0 | 0 | 100 | **250** | 0 | 0 | 100 |
| Mean | | | | | 100 | | | | 100 |
| Variance | | | | | 0 | | | | 0 |
| Standard deviation | | | | | 0 | | | | 0 |

### Interpretation:

These test results show a perfect similarity in the effect of both products: 100% mortality rate observed for each of the two products. Consequently, AraGon proves effective against flies. The mortality rate observed in the absolute control (0%) confirms that the materials had no impact on mortality.

### Experiment results on cockroaches

**Table 3: Mortality rate (as a %) 1 hour after the cockroaches were exposed to the products**

| **Cage no.** | **No. exposed** | **ARAGON** | | | | CONTROL INSECTICIDE | | | ***Efficacy (%)** |
|---|---|---|---|---|---|---|---|---|---|
| | | **Dead** | **Dying** | **Alive** | **Efficacy (%)** | **Dead** | **Dying** | **Alive** | |
| 1 | 20 | 4 | 16 | 0 | 20 | 4 | 15 | 1 | 20 |
| 2 | 20 | 18 | 2 | 0 | 90 | 7 | 12 | 1 | 35 |
| 3 | 20 | 14 | 6 | 0 | 70 | 6 | 14 | 0 | 30 |
| 4 | 20 | 19 | 1 | 0 | 95 | 5 | 14 | 1 | 25 |
| 5 | 20 | 19 | 1 | 0 | 95 | 4 | 16 | 0 | 20 |
| **Total** | **100** | **74** | **26** | 0 | 74 | **26** | 71 | 3 | 26 |
| **Mean** | | | | | 74 | | | | 26 |
| **Variance** | | | | | 814 | | | | 34 |
| **Standard deviation** | | | | | 28,53 | | | | 5,83 |

### Interpretation of Table 3

These test results show a significant difference between the average mortality rates observed (74% for AraGon and 26% for the control product). Indeed, the **t-stat** of 3.69 is between the theoretical values of the Student's t-distribution at **t 0,05** = 1.860 and t **0.001** = 4.501. Therefore, AraGon is better than the control product in the fight against cockroaches. The mortality rate observed in the absolute control (0%) confirms that the materials had no impact on mortality.

### Results of monitoring untreated insects after 1 hour and 12 hours

Untreated control flies, mosquitoes and cockroaches were observed at 1 hour and 12 hours after treatment. These results show that the 50 flies and 40 cockroaches were all alive after 1 hour, totalling 100%. Only 1 out of 80 mosquitoes was dead after 1 hour, meaning that 98% of the specimens were alive.
Checking the untreated absolute control insects after 12 hours showed that 98% of the mosquitoes were alive, while these figures for cockroaches and flies were 100% and 74% respectively.
These figures show that the insects present when testing the products were healthy and that the mortality of exposed insects was essentially due to the effect of the insecticides (see Tables 4 and 5).

**Table 4: Checking the control insects after 1 hour**

| Cage | PERIOD OF EXPOSURE =1 hour | | | | | | | | |
|---|---|---|---|---|---|---|---|---|---|
| | Mosquitoes | | | Flies | | | Cockroaches | | |
| | Dead | Dying | Alive | Dead | Dying | Alive | Dead | Dying | Alive |
| 1 | 0 | 0 | 20 | 0 | 0 | 25 | 0 | 0 | 20 |
| 2 | 0 | 1 | 19 | 0 | 0 | 25 | 0 | 0 | 20 |
| 3 | 0 | 0 | 20 | | | | | | |
| 4 | 0 | 0 | 20 | | | | | | |
| Total | 0 | 1 | 79 | 0 | 0 | 50 | 0 | 0 | 40 |

**Table 5: Checking the control Insects after twelve hours**

| Cage | PERIOD OF EXPOSURE =1 hour | | | | | | | | |
|---|---|---|---|---|---|---|---|---|---|
| | Mosquitoes | | | Flies | | | Cockroaches | | |
| | Dead | Dying | Alive | Dead | Dying | Alive | Dead | Dying | Alive |
| 1 | 0 | 0 | 20 | 6 | 0 | 19 | 0 | 0 | 20 |
| 2 | 1 | 0 | 19 | 7 | 0 | 18 | 0 | 0 | 20 |
| 3 | 0 | 0 | 20 | | | | | | |
| 4 | 0 | 0 | 20 | | | | | | |
| Total | 1 | 0 | 79 | 13 | 0 | 37 | 0 | 0 | 40 |
| Mortality rate | | 1,25 | | | 26 | | | 0 | |

The experiment results show that the aerosol formulation of the AraGon product tested is very effective when in the fight against the three pest insect species that are mosquitoes, cockroaches and flies. Therefore, AraGon may be used as an insecticide for domestic use against the said pests.

Presently, the preferred aerosols described above are further tested against several insecticides available on the market. Preliminary results show that the inventive aerosols are more effective.

## Claims

1. Insecticidal aerosol, **characterized in that** it comprises:
00.1 - 0.5 % by weight of alpha cypermethrin,
00.1 - 0.3 % by weight of permethrin,
0.01 - 0.5 % by weight of tetramethrin,
0.1 - 3.0 % by weight of piperonyl butoxide,
0 - 0.5 % by weight of a fragrance,
one or more solvents, and
one or more propellants.

2. Insecticidal aerosol according to claim 1, **characterized in that** it comprises:
0.1 - 0.4 % by weight, preferably 0.15 - 0.3 % by weight of alpha cypermethrin, and/or
0.1 - 0.25 % by weight, preferably 0.15 - 0.25 % by weight of permethrin, and/or
0.05 - 0.4 % by weight, preferably 0.08 - 0.3 % by weight of tetramethrin, and/or
0.1 - 2.0 % by weight, preferably 0.2 - 0.6 % by weight of piperonyl butoxide and/or
48 - 52 % by weight of one or more solvents, and/or
48 - 52 % by weight of one or more propellants.

3. Insecticidal aerosol according to claim 1 or 2, **characterized in that** it further comprises 0.2 - 0.6 % by weight, preferably 0.3 - 0.5 % by weight of a carbamate insecticide.

4. Insecticidal aerosol according to any of claims 1 to 3, **characterized in that** the carbamate insecticide is bendiocarb.

5. Insecticidal aerosol according to any of claims 1 to 4, **characterized in that** the solvent is a hydrocarbon solvent or a mixture of hydrocarbon solvents.

6. Insecticidal aerosol according to claim 5, **characterized in that** the solvent is selected from ethanol, crude oil, petroleum, acetone and mixtures thereof.

7. Insecticidal aerosol according to any of claims 1 to 6, **characterized in that** the propellant is selected from the group consisting of propane, butane and mixtures thereof.

8. Insecticidal aerosol according to claim 1, **characterized in that** it comprises:
about 0.2 % by weight of alpha cypermethrin,
about 0.2 % by weight of permethrin,
about 0.1 % by weight of tetramethrin,
about 0.3 % by weight of piperonyl butoxide,
48 - 52 % by weight of distillates (crude oil),
48 - 52 % by weight of propane and/or butane, and
0 - 0.2 % by weight of a fragrance.

9. Insecticidal aerosol according to claim 4, **characterized in that** it comprises:
about 0.25 % by weight of alpha cypermethrin,
about 0.2 % by weight of permethrin,
about 0.15 % by weight of tetramethrin,
about 0.5 % by weight of piperonyl butoxide,
about 0.4 % by weight of bendiocarb,
48 - 52 % by weight of ethanol,
48 - 52 % by weight of propane and/or butane, and
0 - 0.2 % by weight of a fragrance.

10. Insecticidal aerosol according to any of claims 1 to 9, **characterized in that** the aerosol is contained in a spray can, preferably in a 300 ml spray can.

11. Non-therapeutic use of a composition of any of claims 1 to 10 for combatting insect pests or parasites.

12. Use according to claim 11, wherein the insect pests or parasites are selected from mosquitoes, flies, cockroaches, bugs, lice, ants, and termites.

13. Use according to claim 12, **characterized in that** the insect pests or parasites are mosquitoes transmitting malaria, preferably selected from the group consisting of *Anopheles gambiae, Anopheles arabiennsis* and *Culex quinquefasciatus.*
